(19) Europäisches Patentamt
European Patent Office
Office européen des brevets

(11) EP 4 729 552 A1

(12) EUROPEAN PATENT APPLICATION
published in accordance with Art. 153(4) EPC

(43) Date of publication:
**22.04.2026 Bulletin 2026/17**

(21) Application number: **24823539.2**

(22) Date of filing: **08.04.2024**

(51) International Patent Classification (IPC):
***C08F 290/06*** *(2006.01)* ***C08F 230/08*** *(2006.01)*
***C08F 220/20*** *(2006.01)* ***C08F 2/44*** *(2006.01)*
***C08F 6/00*** *(2006.01)* ***C08J 3/075*** *(2006.01)*
***G02B 1/04*** *(2006.01)*

(52) Cooperative Patent Classification (CPC):
**C08F 230/085; C08J 3/24; G02B 1/043;**
C08J 2343/04

(86) International application number:
**PCT/KR2024/004609**

(87) International publication number:
**WO 2024/258018 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.06.2023 KR 20230075839**
**01.02.2024 KR 20240016193**

(71) Applicant: **Interojo Inc.**
**Pyeongtaek-si, Gyeonggi-do 17744 (KR)**

(72) Inventor: **PYEN, Seung Hee**
**Asan-si Chungcheongnam-do 31567 (KR)**

(74) Representative: **J A Kemp LLP**
**80 Turnmill Street**
**London EC1M 5QU (GB)**

# (54) SILICONE-CONTAINING COMPOSITION, SILICONE HYDROGEL OBTAINED THEREFROM, AND CONTACT LENS COMPRISING SILICONE HYDROGEL

(57) The present application relates to a composition containing silicone, a silicone hydrogel obtained from the composition containing silicone, and a contact lens comprising the silicone hydrogel. According to the silicone hydrogel obtained from the composition containing silicone, and the contact lens comprising the silicone hydrogel of the present application, the expansion rate generated during the hydration process is low while having an intended water content, and thus, dimensional stability can be excellent and oxygen permeability may be excellent.

EP 4 729 552 A1

## Description

### TECHNICAL FIELD

The present application relates to a composition containing silicone, a silicone hydrogel obtained from the composition containing silicone, and a contact lens comprising the silicone hydrogel.

### BACKGROUND

Contact lenses are typically manufactured by a casting process using polypropylene (PP) molds. For a contact lens formed in the form of a lens through the casting process, a composition containing silicone is produced into a silicone gel through a polymerization reaction and then formed into a silicone hydrogel via a hydration reaction. At this time, expansion occurs during the process in which the silicone gel is hydrated into the silicone hydrogel. Therefore, since the final specifications of the contact lens such as the power, diameter size, curvature size, and thickness are the values after expanded into the hydrogel, the silicone gel must be produced with a PP mold by taking this expansion into account.

As the process in which a silicone gel is expanded into a hydrogel must be predicted by three-dimensional expansion, reducing errors in the predicted values in the actual process has an important impact on improving productivity. If the prediction of specifications between a silicone gel and a hydrogel is off, a problem arises that re-design and then re-manufacturing must be repeated. Hydrogels have spaces between the polymer chains and can thus contain water in the spaces, but it is not easy to cause the hydrogels to expand uniformly in all directions during the hydration process in which they are hydrated in the state of a silicone gel. Due to this, there arises a problem that the shape of the hydrogel does not expand uniformly but into an elliptical shape during the process in which the silicone gel is hydrated. Therefore, in order to resolve these problems, there is a need to use a silicone hydrogel having excellent dimensional stability and oxygen permeability while having excellent water content, and a contact lens comprising the silicone hydrogel.

### SUMMARY

It is an object of the present application to provide a composition containing silicone having excellent dimensional stability and oxygen permeability while having an excellent water content, a silicone hydrogel obtained from the composition containing silicone, and a contact lens comprising the silicone hydrogel.

In order to achieve the above object, a composition containing silicone of the present application comprises a silicone macromer and a non-reactive diluent wherein the silicone macromer has a Hansen solubility index HSP of 10.0 $MPa^{1/2}$ to 20.0 $MPa^{1/2}$.

The composition containing silicone may have a dispersion force $\delta D$ of 13.3 $MPa^{1/2}$ to 15.0 $MPa^{1/2}$, a dipole attraction $\delta P$ of 4.5 $MPa^{1/2}$ to 6.6 $MPa^{1/2}$, and a hydrogen bonding force $\delta H$ of 6.8 $MPa^{1/2}$ to 12.0 $MPa^{1/2}$.

In addition, the composition containing silicone may have a polymer-solvent interaction coefficient $\chi$ of 0.30 to 0.99.

Further, the composition containing silicone may have a Gibbs free energy change $\Delta G$ of $-9 \times 10^{23}$ to $-3.5 \times 10^{22}$.

Moreover, the silicone macromer may be represented by Chemical Formula 1 below:

[Chemical Formula 1]

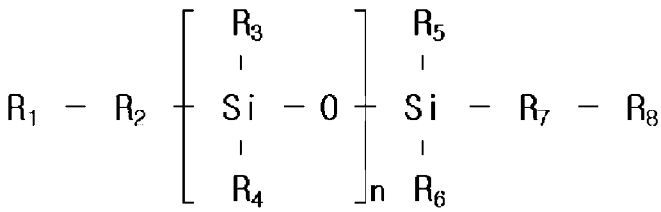

In Chemical Formula 1 above, n is 5 to 20, $R_1$ is a (meth)acryloyl group, $R_2$ is an alkylene group having 1 to 40 carbon atoms, wherein a methylene group included in the alkylene group can be substituted with -O-, -N($R_9$)-, or a carbonyl group, $R_9$ is a hydrogen atom or an alkyl group having 1 to 6 carbon atoms, $R_3$ to $R_6$ are each independently hydrogen, a hydroxyl group, an amino group, a carboxyl group, a halogen atom, or an alkyl group having 1 to 3 carbon atoms, wherein the alkyl group can be substituted with a hydroxyl group, an isocyanate group, a halogen atom, a carboxyl group, or an alkoxy group having 1 to 8 carbon atoms, $R_7$ is a single bond or an alkylene group having 1 to 30 carbon atoms, wherein a methylene group included in the alkylene group can be substituted with -O-, -N($R_{10}$)-, or a carbonyl group, $R_{10}$ is a hydrogen atom or an alkyl group having 1 to 6 carbon atoms, and $R_8$ is hydrogen, a hydroxyl group, an isocyanate group, an

amino group, a carboxyl group, a halogen atom, an alkyl group having 1 to 8 carbon atoms, an alkoxy group having 1 to 8 carbon atoms, or a (meth)acryloyl group.

Furthermore, the non-reactive diluent may be one or more selected from a group consisting of organic acid solvents, alcohol-based solvents, hydrocarbon-based solvents, and ketone-based solvents.

In addition, the non-reactive diluent may be an aliphatic alcohol having 1 to 13 carbon atoms.

In addition, the non-reactive diluent may have a molar volume of 20 $cm^3$/mol to 800 $cm^3$/mol.

Further, the non-reactive diluent may be included at greater than 0 wt% and less than 50 wt%.

Moreover, the composition containing silicone may further comprise one or more selected from a group consisting of a silicone monomer, a hydrophilic monomer, a hydrophilic additive, an amphiphilic polymer, a crosslinking agent, a UV-blocking agent, and an initiator.

Furthermore, a silicone hydrogel of the present application is obtained by polymerizing and subjecting to a hydration reaction the composition containing silicone.

In addition, the silicone hydrogel may have an expansion rate E of General Formula 1 below of 9% or less,

[General Formula 1]

$$E = \frac{b - a}{a} \times 100$$

In General Formula 1 above, a is an area of the silicone gel before the hydration reaction, and b is the area of the silicone hydrogel that has been subjected to the hydration reaction.

Further, the silicone hydrogel may have a water content of 10% or more.

Moreover, the silicone hydrogel may have an oxygen permeability of $60 \times 10^{-11}(cm^2/s)[mLO_2/(mL \cdot mmHg)]$ to $160 \times 10^{-11}(cm^2/s)[mLO_2/(mL \cdot mmHg)]$.

Furthermore, a method for producing a silicone hydrogel of the present application comprises a polymerization step of polymerizing the composition containing silicone; and a hydration step of subjecting the polymerized silicone gel to a hydration reaction.

In addition, in the method for producing a silicone hydrogel, the non-reactive diluent included in the silicone gel may be substituted with water via a hydration reaction in the hydration step.

Further, a contact lens of the present application comprises the silicone hydrogel.

According to the silicone hydrogel obtained from the composition containing silicone, and the contact lens comprising the silicone hydrogel of the present application, the expansion rate generated during the hydration process is low while having an intended water content, and thus, dimensional stability can be excellent, and oxygen permeability may be excellent.

## DETAILED DESCRIPTION OF THE PREFERRED EMBODIMENTS

The present application relates to a composition containing silicone. The composition containing silicone includes a silicone macromer and a non-reactive diluent, and the silicone macromer has a Hansen solubility index HSP of 10.0 $MPa^{1/2}$ to 20.0 $MPa^{1/2}$. Specifically, the Hansen solubility index of the silicone macromer described above may be 11.0 $MPa^{1/2}$ to 18.0 $MPa^{1/2}$ or 11.0 $MPa^{1/2}$ to 16.0 $MPa^{1/2}$. As the composition containing silicone comprising the components described above has a Hansen solubility index of the silicone macromer that satisfies the above range, the expansion rate generated during the hydration process is low while having an intended water content, and thus, dimensional stability can be excellent and oxygen permeability may be excellent, in the process of being formed into a silicone hydrogel to be described later via a hydration reaction.

In the present specification, the "Hansen solubility index HSP" refers to an index indicating a solubility, which is the degree to which a substance will dissolve in another substance. The Hansen solubility index is obtained by dividing the solubility parameter introduced by Hildebrand into three components of a dispersion force $\delta D$, a dipole attraction $\delta P$, and a hydrogen bonding force $\delta H$, which will be described later, and representing them in a three-dimensional space. The detailed definition and calculation of the Hansen solubility index are described in the following literature.

Charles M. Hansen, Hansen Solubility Parameters: A User's Handbook (CRC Press, 2007).

The dispersion force $\delta D$ reflects Van der Waals forces, the dipole attraction $\delta P$ reflects dipole moments, and the hydrogen bonding force $\delta H$ reflects the action by water, alcohol, or the like. In this case, the Hansen solubility index HSP of the composition containing silicone is the sum of the three components, and can be calculated by General Formula 2 below.

[General Formula 2]

$$HSP = (\delta D^2 + \delta P^2 + \delta H^2)^{1/2}$$

In General Formula 2 above, δD is the dispersion force of the composition containing silicone, δP is the dipole attraction of the composition containing silicone, and δH is the hydrogen bonding force of the composition containing silicone.

The Hansen solubility index HSP[δD, δP, δH] can be readily estimated from its chemical structure by using, for example, the computer software Hansen Solubility Parameters in Practice (HSPiP). Specifically, the Hansen solubility index can be obtained from the chemical structure by the Y-MB method, which is mounted on HSPiP. In addition, if the chemical structure is unknown, the Hansen solubility index can be obtained from the results of dissolution tests using a plurality of solvents by the sphere method mounted on HSPiP. In the present specification, the Hansen solubility index may be determined by the types and contents of the silicone macromer and non-reactive diluent used, and the like.

The Hansen solubility index HSP of the composition containing silicone may be 15.5 $MPa^{1/2}$ to 20.7 $MPa^{1/2}$, 16.2 $MPa^{1/2}$ to 20.5 $MPa^{1/2}$, or 16.3 $MPa^{1/2}$ to 20.0 $MPa^{1/2}$. As the composition containing silicone has the Hansen solubility index that satisfies the ranges described above, the expansion rate generated during the hydration process is low while having an intended water content, and thus, dimensional stability can be excellent and oxygen permeability may be excellent.

The composition containing silicone may have a dispersion force δD of 13.3 $MPa^{1/2}$ to 15.0 $MPa^{1/2}$, a dipole attraction δP of 4.5 $MPa^{1/2}$ to 6.6 $MPa^{1/2}$, and a hydrogen bonding force δH of 6.8 $MPa^{1/2}$ to 12.0 $MPa^{1/2}$. Specifically, the composition containing silicone may have a dispersion force δD of 13.5 $MPa^{1/2}$ to 14.5 $MPa^{1/2}$, a dipole attraction δP of 4.8 $MPa^{1/2}$ to 6.3 $MPa^{1/2}$, and a hydrogen bonding force δH of 7.1 $MPa^{1/2}$ to 11.5 $MPa^{1/2}$. As the composition containing silicone has the dispersion force, the dipole attraction, and the hydrogen bonding force that satisfy the ranges described above, the expansion rate generated during the hydration process is low while having an intended water content, and thus, dimensional stability can be excellent and oxygen permeability may be excellent.

In one example, the composition containing silicone has a polymer-solvent interaction coefficient χ of 0.30 to 0.99. Specifically, the composition containing silicone may have a polymer-solvent interaction coefficient χ of 0.34 to 0.98. As the polymer-solvent interaction coefficient of the composition containing silicone satisfies the above range, the expansion rate generated during the hydration process is low while having an intended water content, and thus, dimensional stability can be excellent and oxygen permeability may be excellent, in the process of being formed into a silicone hydrogel to be described later via a hydration reaction.

In the present specification, the "polymer-solvent interaction coefficient" refers to a coefficient indicative of the affinity between the silicone macromer and the non-reactive diluent included in the composition containing silicone. The polymer-solvent interaction coefficient χ of the composition containing silicone can be calculated by General Formula 3 below.

[General Formula 3]

$$\chi = \frac{v({\Phi_1}^2 - {\Phi_2}^2)}{RT}$$

In General Formula 3 above, R is the gas constant, T is the absolute temperature, v is the molar volume of the non-reactive diluent, $\Phi_1$ is the Hansen solubility index of the silicone macromer, and $\Phi_2$ is the Hansen solubility index of the non-reactive diluent.

In another example, the composition containing silicone may have a Gibbs free energy change ΔG of $-9 \times 10^{23}$ to $-3.5 \times 10^{22}$, and specifically, $-8.9 \times 10^{23}$ to $-3.6 \times 10^{22}$ or $-8.8 \times 10^{23}$ to $-3.7 \times 10^{22}$. As the composition containing silicone has the Gibbs free energy change that satisfies the above range, the morphology of the silicone gel can be improved during the polymerization reaction, and as a result, the expansion rate generated during the hydration process is low while having an intended water content, and thus, dimensional stability can be excellent and oxygen permeability may be excellent, in the process of being formed into a silicone hydrogel to be described later via a hydration reaction.

In the present specification, the "Gibbs free energy" refers to the maximum value of useful energy that can be extracted during a reversible process when a thermodynamic system is subjected to the process while maintaining a constant temperature and pressure. The amount of change in the Gibbs free energy of the composition containing silicone can be calculated by General Formula 4 below based on the Flory-Huggins solution theory.

[General Formula 4]

$$\Delta G = RT(n_1 \cdot ln\varphi_1 + n_2 \cdot ln\varphi_2 + n_1 \cdot \varphi_2\chi)$$

In General Formula 4 above, R is the gas constant, T is the absolute temperature, $n_1$ is the number of moles of the silicone macromer, $n_2$ is the number of moles of the non-reactive diluent, $\varphi_1$ is the volume fraction of the silicone macromer, $\varphi_2$ is the volume fraction of the non-reactive diluent, and $\chi$ is the polymer-solvent interaction coefficient.

The silicone macromer is a chain that forms the main skeleton of a three-dimensional structure such as a siloxane bond consisting of silicon and oxygen, and refers to a macromolecular unit that has functional groups at the ends and can be copolymerized with other monomers and create polymers with wider molecular weight ranges, and is a main component of contact lenses to be described later. For example, the silicone macromer may have a molecular weight of 500 g/mol to 2000 g/mol. By having the molecular weight described above, the silicone macromer can improve the oxygen permeability, water content, tensile strength, and the like of the silicone hydrogel, which will be described later.

As the silicone macromer, a silicone macromer represented by Chemical Formula 1 may be used in order to improve the oxygen permeability in the silicone hydrogel to be described later and to obtain an intended water content with appropriate crosslinking.

[Chemical Formula 1]

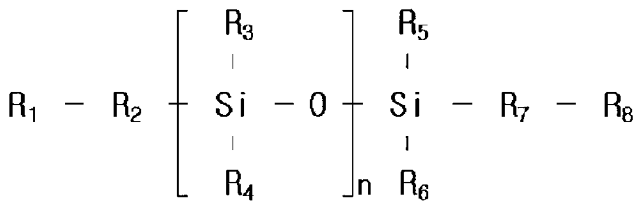

In Chemical Formula 1 above, n is 5 to 20, $R_1$ is a (meth)acryloyl group, $R_2$ is an alkylene group having 1 to 40 carbon atoms, wherein the methylene group included in the alkylene group may be substituted with -O-, -N($R_9$)-, or a carbonyl group, $R_9$ is a hydrogen atom or an alkyl group having 1 to 6 carbon atoms, $R_3$ to $R_6$ are each independently hydrogen, a hydroxyl group, an amino group, a carboxyl group, a halogen atom, or an alkyl group having 1 to 3 carbon atoms, wherein the alkyl group may be substituted with a hydroxyl group, an isocyanate group, a halogen atom, a carboxyl group, or an alkoxy group having 1 to 8 carbon atoms, $R_7$ is a single bond or an alkylene group having 1 to 30 carbon atoms, wherein the methylene group included in the alkylene group may be substituted with -O-, -N($R_{10}$)- or a carbonyl group, $R_{10}$ is a hydrogen atom or an alkyl group having 1 to 6 carbon atoms, and $R_8$ is hydrogen, a hydroxyl group, an isocyanate group, an amino group, a carboxyl group, a halogen atom, an alkyl group having 1 to 8 carbon atoms, an alkoxy group having 1 to 8 carbon atoms, or a (meth)acryloyl group.

Further, in Chemical Formula 1 above, n may be 5 to 15, or 5 to 10.

$R_2$ may be an alkylene group having 1 to 30 carbon atoms or an alkylene group having 1 to 25 carbon atoms.

The alkyl group of $R_3$ to $R_6$ may be a methyl group or an ethyl group, or may be a methyl group. In addition, the alkoxy group as a substituent of the alkyl group may have 1 to 6 carbon atoms or 1 to 4 carbon atoms.

$R_7$ may be a single bond or an alkylene group having 1 to 20 carbon atoms, or may be a single bond or an alkylene group having 1 to 15 carbon atoms.

The alkyl group of $R_8$ may have 1 to 6 carbon atoms. The alkoxy group of $R_8$ may have 1 to 6 carbon atoms or 1 to 4 carbon atoms.

$R_9$ and $R_{10}$ may each be an alkyl group having 1 to 4 carbon atoms, or may be a methyl group or an ethyl group.

The non-reactive diluent is present between polymer chains during the process in which the silicone macromer is polymerized, does not substantially react with the silicone macromer, specifically with the components contained in the composition containing silicone, and serves to maintain a space that can be substituted with water during the hydration reaction. The non-reactive diluent is free of reactive groups, and can thus exist in its original state without reacting with the silicone macromer or crosslinking agents to be described later during the polymerization and crosslinking reactions. That is, when the non-reactive diluent is polymerized with the silicone macromer, the silicone macromer is formed into a polymer chain, and as the compatibility of the polymer chain and the non-reactive diluent changes, alcohol molecules gather in the polymer chain at the nanometer level, and a phase separation may occur between the polymer chain and the non-reactive diluent, thereby creating a space where water can be substituted. The non-reactive diluent of nanometer size that is phase-separated may be extracted by a hydration process, and water may be substituted in its place. The morphology formed by the non-reactive diluent during the polymerization process may maintain its shape even after extraction, and in addition,

the non-reactive diluent is substituted with water through the hydration reaction, thereby determining the moisture content of the silicone hydrogel. In this case, since the moisture content is achieved not by the network expansion by water absorption but by water substitution in the morphology, an intended water content can be obtained. Further, the silicone hydrogel can have excellent dimensional stability due to a low expansion rate generated during the hydration process, and excellent oxygen permeability.

The non-reactive diluent is not particularly limited in its type as long as it does not react with the components included in the composition containing silicone, and may be one or more solvents selected from the group consisting of organic acid solvents, alcohol-based solvents, hydrocarbon-based solvents, and ketone-based solvents, for example.

As the organic acid solvent, an organic acid solvent having 1 to 16 carbon atoms or 1 to 9 carbon atoms may be used, and specifically, solvents such as formic acid, acetic acid, propionic acid, acrylic acid, propiolic acid, butyric acid, valeric acid, β-hydroxy β-methylbutyric acid, caproic acid, heptanoic acid or caprylic acid, nonanoic acid, and the like may be used.

As the alcohol-based solvent, an aliphatic alcohol solvent having 1 to 13 carbon atoms or an aromatic alcohol solvent having 6 to 12 carbon atoms may be used. Specifically, as the aliphatic alcohol having 1 to 13 carbon atoms (n-aliphatic alcohol), methanol, ethanol, 1-propanol, 2-propanol, isopropyl alcohol, 1-butanol, 1-pentanol, 1-hexanol, 1-heptanol, 1-octanol, 1-nonanol, 1-decanol, 1-undecanol, 1-dodecanol, tripropylene glycol monobutyl ether, ethylene glycol, propylene glycol, butoxy ethanol, or the like may be used. Further, specifically, as the aromatic alcohol having 6 to 12 carbon atoms, benzyl alcohol, methyl benzyl alcohol, phenethyl alcohol, or the like may be used.

As the hydrocarbon-based solvent, an aliphatic hydrocarbon-based solvent having 1 to 20 carbon atoms, an alicyclic hydrocarbon-based solvent having 3 to 20 carbon atoms, or an aromatic hydrocarbon-based solvent having 6 to 20 carbon atoms may be used, and benzene, toluene, or the like may be used, for example.

As the ketone-based solvent, for example, acetone, methyl ethyl ketone, or the like may be used.

Specifically, the non-reactive diluent may be the alcohol-based solvent, or may be the aliphatic alcohol having 1 to 13 carbon atoms. By using the non-reactive diluent, the expansion rate can be further reduced.

In one example, the non-reactive diluent may have a molar volume of 20 $cm^3$/mol to 800 $cm^3$/mol. Specifically, the non-reactive diluent may have a molar volume of 20 $cm^3$/mol to 650 $cm^3$/mol, 30 $cm^3$/mol to 500 $cm^3$/mol, 40 $cm^3$/mol to 350 $cm^3$/mol, or 50 $cm^3$/mol to 200 $cm^3$/mol. By having the molar volume described above, the non-reactive diluent can form an intended morphology, and thereby reduce the expansion rate generated during the hydration process.

In addition, the non-reactive diluent may be included in the composition containing silicone at greater than 0 wt% and less than 50 wt%, and specifically, may be included at 2 wt% or more, 3 wt% or more, or 5 wt% or more, and may be included at 48 wt% or less, 45 wt% or less, 43 wt% or less, or 40 wt% or less. By being contained in the amount described above in the composition containing silicone, the non-reactive diluent can satisfy desirable numerical ranges such as the Hansen solubility index, the polymer-solvent interaction coefficient, and the Gibbs free energy change of the composition containing silicone, and accordingly, in the process of being formed into a silicone hydrogel to be described later via a hydration reaction, while the silicone hydrogel can have an intended water content, it can have excellent dimensional stability due to a low expansion rate generated during the hydration process, and excellent oxygen permeability.

In one example, the composition containing silicone may further include one or more selected from a silicone monomer, a hydrophilic monomer, a hydrophilic additive, an amphiphilic polymer, a crosslinking agent, a UV-blocking agent, and an initiator in addition to the silicone macromer. Here, the initiator may be at least one of a photoinitiator and a thermal initiator.

Specifically, the silicone monomer is a monomer having a molecular weight of 200 g/mol to less than 500 g/mol, and may be included in the composition containing silicone in order to improve the elongation, strength, and modulus of a contact lens described later. For example, as the silicone monomer, methacryloxypropyl-terminated polydimethylsiloxane; 2-propenoic acid, 2-methyl-2-hydroxy-3-3-1,3,3,3-tetramethyl-1-(trimethylsilyl)oxydisiloxanyl-propoxypropyl ester; and/or [tris(trimethylsiloxy)silyl]propyl methacrylate may be used.

Further, the hydrophilic monomer is a monomer having a molecular weight of 100 g/mol to 800 g/mol, and may be included in the composition containing silicone for the role of improving hydrophilicity and flexibility. For example, 2-hydroxyethyl (meth)acrylate and/or hydroxybutyl (meth)acrylate may be used as the hydrophilic monomer.

Moreover, the hydrophilic additive may be included in the composition containing silicone for the role of increasing wettability and water content of the lens. For example, polyvinyl pyrrolidone, N-vinyl pyrrolidone, and/or N,N-dimethylacrylamide may be used as the hydrophilic additive.

Furthermore, the type of the amphiphilic polymer is not particularly limited, and any amphiphilic polymer known in the art may be used without limitation.

In addition, the crosslinking agent may be included in the composition containing silicone for the role of improving strength and elasticity by forming a network structure as the monomers are linked to one another. For example, as the crosslinking agent, triallyl isocyanurate, tetraethylene glycol di(meth)acrylate, ethylene glycol di(meth)acrylate, diethylene glycol di(meth)acrylate, and/or allyl (meth)acrylate may be used.

Further, the UV-blocking agent may be included in the composition containing silicone for the role of preventing

UV light from entering the eyes directly. For example, as the UV-blocking agent, 2-(4-benzoyl-3-hydroxyphenoxy)ethyl acrylate, 2,4-dihydroxybenzophenone, 2-ethylhexyl-trans-4-methoxy-cinnamate, 2-hydroxy-4-(methacryloyloxy)benzophenone, 2-(2'-hydroxy-5'-methacryloxyethylphenyl)-2H-benzotriazole, 2-[3-(2Hbenzotriazol-2-yl)-4-hydroxyphenyl] ethyl methacrylate, and the like may be used.

Moreover, the photoinitiator may be included in the composition containing silicone to initiate polymerization in response to light. For example, aromatic alpha-hydroxy ketones, alkoxyoxybenzoins, acetophenones, acyl phosphine oxides, tertiary amines, and/or diketones may be used as the photoinitiator. Specifically, as the photoinitiator, 1-hydroxycyclohexyl phenyl ketone, 2-hydroxy-2-methyl-1-phenyl-propan-1-one, bis(2,6-dimethoxybenzoyl)-2,4,4-trimethylpentyl phosphine oxide (DMBAPO), bis(2,4,6-trimethylbenzoyl)-phenyl phosphine oxide (Irgacure 819), 2,4,6-trimethylbenzyldiphenyl phosphine oxide, 2,4,6-trimethylbenzoyl diphenyl phosphine oxide, benzoin methyl ester, and/or a combination of camphorquinone and ethyl 4-(N,N-dimethylamino)benzoate, or the like may be used.

The present application also relates to silicone hydrogels. The silicone hydrogel relates to a silicone hydrogel obtained from the composition containing silicone described above, and specifics of the composition containing silicone to be described later will be omitted since the contents described in the composition containing silicone above can be applied in the same manner.

The silicone hydrogel is obtained by polymerizing and subjecting to a hydration reaction the composition containing silicone described above. Specifically, upon polymerization of the composition containing silicone, a polymer chain may be formed, and as the compatibility of the polymer chain and the non-reactive diluent changes, alcohol molecules gather in the polymer chain at the nanometer level, a phase separation occurs, and a silicone gel may be formed in which a space where water can be substituted is formed. Thereafter, for the silicone gel, the non-reactive diluent of nanometer size that is phase-separated may be extracted via a hydration reaction, and water may be substituted in its place, thereby obtaining a silicone hydrogel. As the morphology formed by the non-reactive diluent during the polymerization process may maintain its shape even after extraction, and in addition, the non-reactive diluent is substituted with water through the hydration reaction, the silicone hydrogel may be excellent in the dimensional stability as the expansion rate generated during the hydration process is low while having an intended water content, and may have excellent oxygen permeability. As used herein, the term "silicone gel" refers to a polymeric state of the composition containing silicone after polymerization but before hydration.

In one example, the silicone hydrogel may have an expansion rate E of General Formula 1 below of 9% or less, and specifically, 7% or less, 5% or less, 3% or less, or 1% or less. The silicone hydrogel is not particularly limited in the lower limit in that the lower the expansion rate of General Formula 1 below, the better the dimensional stability.

[General Formula 1]

$$E = \frac{b - a}{a} \times 100$$

In General Formula 1 above, a is the area of the silicone gel before the hydration reaction, and b is the area of the silicone hydrogel that has been subjected to the hydration reaction.

The silicone hydrogel can have excellent dimensional stability by having the expansion rate of General Formula 1 above of the range described above. The silicone gel and silicone hydrogel may be polymerized by a mold during the manufacturing process and have the form of a contact lens. As a result, the area of the silicone gel and silicone hydrogel can be calculated via the diameter measured in the polymerized state.

In addition, the silicone hydrogel may have a water content of 10% or more. The water content of the silicone hydrogel is not particularly limited in the upper limit in that the higher, the better the moisture content, but may be, for example, 50% or less, 45% or less, 40% or less, or 35% or less. The silicone hydrogel can have an excellent moisture content by having the water content in the range described above.

Further, the silicone hydrogel may have an oxygen permeability of $60 \times 10^{-11}(cm^2/s)[mLO_2/(mL\cdot mmHg)]$ to $160 \times 10^{-11}(cm^2/s)[mLO_2/(mL\cdot mmHg)]$, and specifically, $65 \times 10^{-11}(cm^2/s)[mLO_2/(mL\cdot mmHg)]$ to $153 \times 10^{-11}(cm^2/s)[mLO_2/(mL\cdot mmHg)]$ or $70 \times 10^{-11}(cm^2/s)[mLO_2/(mL\cdot mmHg)]$ to $145 \times 10^{-11}(cm^2/s)[mLO_2/(mL\cdot mmHg)]$. By having the oxygen permeability described above, the silicone hydrogel when included in a contact lens described later can have an increased amount of oxygen supplied to the cornea of the eye, have excellent wearing comfort, and can maintain the eye in a healthy state. The oxygen permeability can be represented by a diffusion coefficient D that is the capacity to pass through the silicone hydrogel and a dissolution coefficient k that indicates the degree to which oxygen dissolves in the silicone hydrogel, and can be measured using the polarographic method according to ISO 18369.

The present application also relates to a method for producing a silicone hydrogel. The method for producing a silicone hydrogel relates to the method for producing the silicone hydrogel described above, and specifics of the silicone hydrogel to be described later will be omitted since the contents described in the silicone hydrogel above can be applied in

the same manner.

The method for producing a silicone hydrogel includes a polymerization step and a hydration step. According to the method for producing a silicone hydrogel of the present application, it is possible to produce a silicone hydrogel that has excellent dimensional stability as the expansion rate generated during the hydration process is low while having an intended water content, and has excellent oxygen permeability.

The polymerization step is a step of producing a silicone gel by polymerizing the composition containing silicone described above. For example, the composition containing silicone may be polymerized by a cast molding method, and specifically, may be polymerized by irradiating ultraviolet light at an illuminance of 2 $mW/cm^2$ to 40 $mW/cm^2$ in a wavelength range of 350 nm to 500 nm.

The hydration step is a step of producing a silicone hydrogel by subjecting the silicone gel polymerized in the polymerization step to a hydration reaction. For example, the hydration step may be performed by placing the polymerized silicone gel in purified water for 1 hour to 3 hours, extracting residual monomers, and substituting the non-reactive diluent with water.

The present application also relates to contact lenses. The contact lens relates to a contact lens comprising the silicone hydrogel described above, and specifics of the contact lens to be described later will be omitted since the contents described in the silicone hydrogel above can be applied in the same manner.

The contact lens includes the silicone hydrogel described above. According to the contact lens of the present application, not only can the water content be excellent, but also the dimensional stability may be excellent.

In one example, the contact lens may further include a hardware device inserted therein. Specifically, by having the physical properties described above, the contact lens may be useful to insert a hardware device therein. As the hardware device, there is no particular limitation, but, for example, a hardware device such as an electronic element may be used.

The contact lens having the physical properties described above may be useful for inserting a hardware device therein. Specifically, the contact lens comprising the silicone hydrogel may be manufactured via a hydration step. The composition containing silicone that makes up the lens body of the contact lens may generally have the property of expanding during the hydration step, whereas the hardware device inserted into the contact lens may have the property of not expanding. In particular, if the expansion rate is not controlled, the expansion rate of the contact lens comprising the silicone hydrogel may be outside the predicted range, and the silicone hydrogel may generate irregular expansion, warping, or the like in the hydration step.

If a hardware device is inserted inside the contact lens, the hardware device may be inserted prior to the hydration step. Specifically, the hardware device is inserted into the composition containing silicone described above and polymerized to produce a silicone gel with the hardware device inserted therein, and thereafter, the polymerized silicone gel may be subjected to a hydration reaction, thereby producing a silicone hydrogel with the hardware device inserted therein. In this case, the silicone gel with the hardware device inserted therein may be referred to as a dry lens, and the silicone hydrogel with the hardware device inserted therein may be referred to as a wet lens. Therefore, if the silicone composition with a hardware device such as an electronic element inserted therein is subjected to the hydration step after the polymerization step, the silicone composition expands and deforms while turning into a silicone hydrogel, and accordingly, external forces are applied to the hardware device inserted therein. At this time, the expansion or the like of the silicone hydrogel causes warping, failure, and performance degradation of the hardware device inserted therein. Therefore, the defect rate of the contact lens with the hardware inserted therein can be reduced and the performance can be maintained only if the rate of change in the area, size, thickness, shape, volume, and the like of the contact lens before and after hydration is small.

Here, since the rate of change in the area, size, thickness, shape, volume, and the like of the contact lens before and after hydration is affected by the expansion rate of the silicone composition, it is important to control the expansion rate below a certain level.

For example, the contact lens may include a lens body, a protective layer, and a hardware device. Specifically, the lens body is the body of the contact lens formed to be wearable on the cornea, and may include the silicone hydrogel described above. In addition, the protective layer is a layer deposited on the lens body to protect the hardware device, and may include the silicone hydrogel described above. Further, the hardware device is a hardware device such as the electronic element described above, and may be inserted between the lens body and the protective layer.

In one example, the silicone hydrogel may have an expansion rate E of General Formula 1 below of 9% or less.

[General Formula 1]

$$E = \frac{b - a}{a} \times 100$$

In General Formula 1 above, a is the area of the silicone gel before the hydration reaction, and b is the area of the silicone hydrogel that has been subjected to the hydration reaction.

In another example, the contact lens may further include an ophthalmic medication loaded therein. Specifically, by having the physical properties described above, the contact lens may be useful to load an ophthalmic medication therein. As the ophthalmic medication, there is no particular limitation, but, for example, any medication capable of diagnosing and treating ocular diseases may be used.

This can be applied not only to an embodiment in which a device for loading an ophthalmic medication is inserted into the contact lens, but also to a case where the material of the contact lens directly loads a medication. That is, if a space in which a medication is to be loaded is provided in advance in a silicone gel state, a lens for loading an ophthalmic medication can be manufactured without deformation in volume or shape by filling the space with the medication.

As one embodiment, after polymerizing the composition containing silicone, while undergoing a hydration step in which the polymerized silicone gel is reacted with water and/or the medication, some or all of the non-reactive diluent is substituted with the ophthalmic medication in the hydration step, and thus, a lens for loading an ophthalmic medication can be manufactured.

For example, the contact lens may include a lens body, a protective layer, and an ophthalmic medication. Specifically, the lens body is the body of the contact lens formed to be wearable on the cornea, and may include the silicone hydrogel described above. In addition, the protective layer is a layer deposited on the lens body to protect the hardware device, and may include the silicone hydrogel described above. Further, the ophthalmic medication is the ophthalmic medication described above, and may be inserted between the lens body and the protective layer.

Hereinafter, the present application will be described in more detail by way of embodiments of the present application, but the scope of the present application is not limited by the embodiments presented below.

**Evaluation Method 1. Evaluation of Hansen Solubility Index HSP, Dispersion Force δD, Dipole Attraction δP, and Hydrogen Bonding Force δH**

The Hansen solubility index HSP was obtained by the Y-MB method mounted on the HSPiP for the silicone macromer used in each of the embodiments, and the dispersion force δD, the dipole attraction δP, and the hydrogen bonding force δH of each composition containing silicone used in the production of the silicone gel in each of the embodiments were determined by the sphere method mounted on the HSPiP, and then the Hansen solubility index HSP of the composition containing silicone was calculated and evaluated according to General Formula 2 below.

[General Formula 2]

$$HSP = (\delta D^2 + \delta P^2 + \delta H^2)^{1/2}$$

In General Formula 2 above, δD is the dispersion force of the composition containing silicone, δP is the dipole attraction of the composition containing silicone, and δH is the hydrogen bonding force of the composition containing silicone.

**Evaluation Method 2. Evaluation of Polymer-Solvent Interaction Coefficient χ**

The polymer-solvent interaction coefficient χ between the silicone macromer and the non-reactive diluent included in each composition containing silicone used in the production of the silicone gel in each of the embodiments was calculated and evaluated according to General Formula 3 below.

[General Formula 3]

$$\chi = \frac{v(\Phi_1{}^2 - \Phi_2{}^2)}{RT}$$

In General Formula 3 above, R is the gas constant, T is the absolute temperature, v is the molar volume of the non-reactive diluent, $\Phi_1$ is the Hansen solubility index of the silicone macromer, and $\Phi_2$ is the Hansen solubility index of the non-reactive diluent.

**Evaluation Method 3. Evaluation of Gibbs Free Energy Change $\Delta G$**

The Gibbs free energy change of each composition containing silicone used in the production of the silicone gel in each of the embodiments was calculated and evaluated according to General Formula 4 below.

[General Formula 4]

$$\Delta G = RT(n_1 \cdot ln\varphi_1 + n_2 \cdot ln\varphi_2 + n_1 \cdot \varphi_2\chi)$$

In General Formula 4 above, R is the gas constant, T is the absolute temperature, $n_1$ is the number of moles of the silicone macromer, $n_2$ is the number of moles of the non-reactive diluent, $\varphi_1$ is the Hansen solubility index of the silicone macromer, $\varphi_2$ is the Hansen solubility index of the non-reactive diluent, and $\chi$ is the polymer-solvent interaction coefficient.

**Evaluation Method 4. Evaluation of Expansion Rate E**

The area of each of the silicone gel and the silicone hydrogel produced in each of the embodiments was measured, and the expansion rate E of the silicone hydrogel was calculated and evaluated according to General Formula 1 below.

[General Formula 1]

$$E = \frac{b - a}{a} \times 100$$

In General Formula 1 above, a is the area of the silicone gel before the hydration reaction, and b is the area of the silicone hydrogel that has been subjected to the hydration reaction.

**Evaluation Method 5. Evaluation of Water Content $W_{H20}$**

The water content $W_{H20}$ of the silicone hydrogel produced in each of the embodiments was calculated and evaluated according to General Formula 5 below by using a gravimetric method. At this time, each silicone hydrogel was weighed after removing moisture from its surface, and weighed after drying until there was no change in weight at 105 °C.

[General Formula 5]

$$W_{H_2O} = \frac{m1 - m2}{m1} \times 100$$

In General Formula 5 above, m1 is the weight of the silicone hydrogel before drying, and m2 is the weight of the silicone hydrogel after drying.

**Evaluation method 6. Evaluation of Oxygen Permeability Dk**

The oxygen permeability Dk of the silicone hydrogel produced in each of the embodiments was measured and evaluated using the polarographic method according to ISO 18369.

**Preparation Example 1**

Preparation of Silicone Macromer 1

As a silicone macromer, silicone macromer 1 of Chemical Formula 2 below having a Hansen solubility index HSP of 12.0 $MPa^{1/2}$ was prepared.

[Chemical Formula 2]

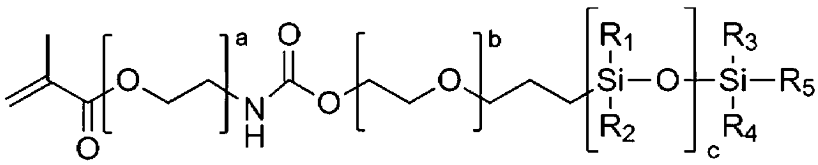

In Chemical Formula 2 above, a is 3, b is 3, c is 5, $R_1$ to $R_4$ are each a methyl group, and $R_5$ is a butyl group.

**Preparation Example 2**

Preparation of Silicone Macromer 2

As a silicone macromer, silicone macromer 2 of Chemical Formula 3 below having a Hansen solubility index HSP of 13.4 $MPa^{1/2}$ was prepared.

[Chemical Formula 3]

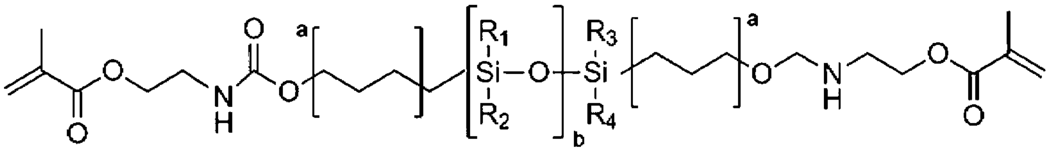

In Chemical Formula 3 above, a is 3, b is 7, and $R_1$ to $R_4$ are each a methyl group.

**Preparation Example 3**

Preparation of Silicone Macromer 3

As a silicone macromer, silicone macromer 3 of Chemical Formula 4 below having a Hansen solubility index HSP of 22.5 $MPa^{1/2}$ was prepared.

[Chemical Formula 4]

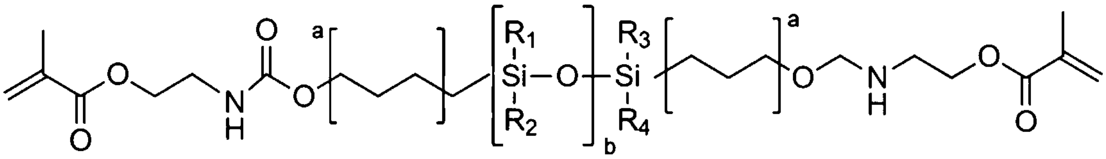

In Chemical Formula 4 above, a is 1, b is 1, and $R_1$ to $R_4$ are each a methyl group.

**Preparation Example 4**

Preparation of Silicone Macromer 4

As a silicone macromer, silicone macromer 4 of Chemical Formula 5 below having a Hansen solubility index HSP of 22.0 $MPa^{1/2}$ was prepared.

[Chemical Formula 5]

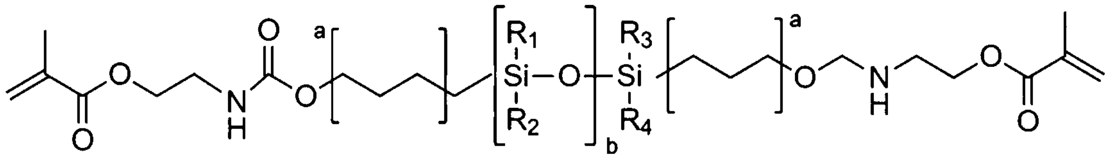

In Chemical Formula 5 above, a is 1, b is 3, and $R_1$ to $R_4$ are each a methyl group.

**Preparation Example 5**

Preparation of Silicone Macromer 5

As a silicone macromer, silicone macromer 5 of Chemical Formula 6 below having a Hansen solubility index HSP of 7.5 $MPa^{1/2}$ was prepared.

[Chemical Formula 6]

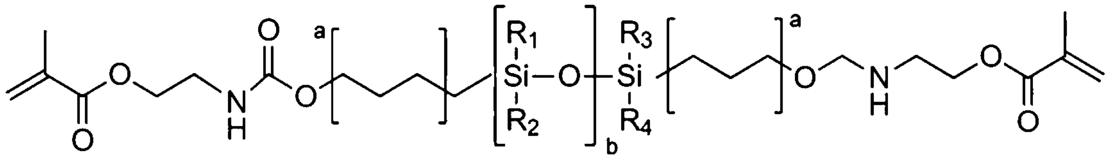

In Chemical Formula 6 above, a is 10, b is 22, and $R_1$ to $R_4$ are each a methyl group.

**Preparation Example 6**

Preparation of Silicone Macromer 6

As a silicone macromer, silicone macromer 6 of Chemical Formula 7 below having a Hansen solubility index HSP of 5.1 $MPa^{1/2}$ was prepared.

[Chemical Formula 7]

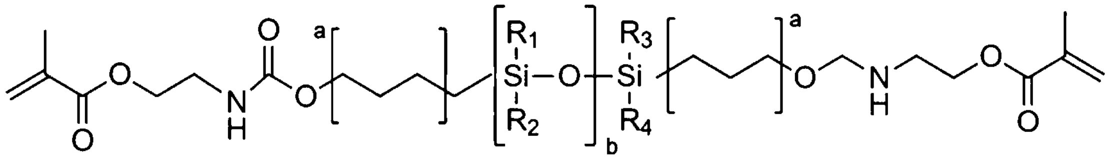

In Chemical Formula 7 above, a is 12, b is 25, and $R_1$ to $R_4$ are each a methyl group.

**Embodiment 1**

Production of Silicone Gel

The components shown in Table 1 below were mixed, then placed in a mold, and cured by a cast molding method under the conditions of a wavelength of 430 nm and 20 $mW/cm^2$, thereby producing a silicone gel.

[Table 1]

| Components | | Content (wt%) |
|---|---|---|
| Silicone macromer | 1 | 29.7 |
| Non-reactive diluent | IPA | 5.0 |

(continued)

| Components | | Content (wt%) |
|---|---|---|
| Silicone monomer | DS | 0.7 |
| | SIGMA | 36.1 |
| Hydrophilic monomer | HEMA | 24.7 |
| Hydrophilic additive | PVP | 0.5 |
| Crosslinking agent | TAIC | 0.7 |
| | TEGDMA | 1.1 |
| UV-blocking agent | 2-(4-Benzoyl-3-hydroxyphenoxy)ethyl acrylate | 0.9 |
| Photoinitiator | AIBN | 0.6 |
| IPA: isopropyl alcohol<br>DS: methacryloxypropyl-terminated polydimethylsiloxane<br>SIGMA: 2-propenoic acid, 2-methyl-2-hydroxy-3-3-1,3,3,3-tetramethyl-1-(trimethylsilyl)oxydisiloxanyl-propoxypropyl ester<br>HEMA: 2-hydroxyethyl methacrylate<br>PVP: polyvinyl pyrrolidone<br>TAIC: triallyl isocyanurate<br>TEGDMA: tetraethyleneglycol dimethacrylate<br>AIBN: 2,2'- azobisisobutyronitrile | | |

**Embodiments 2 to 8**

<u>Production of Silicone Gels</u>

Silicone gels of each of Embodiments 2 to 8 were produced in the same manner as in Embodiment 1, except that the components shown in Table 2 below were mixed.

[Table 2]

| Embodiments | | 2 | 3 | 4 | 5 | 6 | 7 | 8 |
|---|---|---|---|---|---|---|---|---|
| Components | | Content (wt%) | | | | | | |
| Silicone macromer | 1 | 28.1 | 26.5 | 24.9 | 23.4 | 21.8 | 20.2 | 31.3 |
| Non-reactive diluent | IPA | 10.0 | 15.0 | 20.0 | 25.0 | 30.0 | 35.0 | 0.0 |
| Silicone monomer | DS | 0.6 | 0.6 | 0.5 | 0.5 | 0.5 | 0.4 | 0.7 |
| | SIGMA | 34.2 | 23.3 | 30.4 | 28.3 | 26.4 | 24.6 | 38.1 |
| Hydrophilic monomer | HEMA | 23.4 | 22.1 | 20.8 | 19.4 | 18.1 | 16.8 | 26.0 |
| Hydrophilic additive | PVP | 0.5 | 0.4 | 0.4 | 0.4 | 0.4 | 0.3 | 0.5 |
| Crosslinking agent | TAIC | 0.7 | 0.6 | 0.6 | 0.6 | 0.5 | 0.5 | 0.7 |
| | TEGDMA | 1.0 | 1.0 | 0.9 | 0.9 | 0.8 | 0.7 | 1.2 |
| UV-blocking agent | 2-(4-Benzoyl-3-hydroxyphenoxy)ethyl acrylate | 0.9 | 0.9 | 0.9 | 0.9 | 0.9 | 0.9 | 0.9 |
| Photoinitiator | IBN | 0.6 | 0.6 | 0.6 | 0.6 | 0.6 | 0.6 | 0.6 |
| IPA: isopropyl alcohol<br>DS: methacryloxypropyl-terminated polydimethylsiloxane | | | | | | | | |

(continued)

| Embodiments | 2 | 3 | 4 | 5 | 6 | 7 | 8 |
|---|---|---|---|---|---|---|---|
| Components | Content (wt%) | | | | | | |
| SIGMA: 2-propenoic acid, 2-methyl-2-hydroxy-3-3-1,3,3,3-tetramethyl-1-(trimethylsilyl)oxydisiloxanyl-propoxypropyl ester<br>HEMA: 2-hydroxyethyl methacrylate<br>PVP: polyvinyl pyrrolidone<br>TAIC: triallyl isocyanurate<br>TEGDMA: tetraethyleneglycol dimethacrylate<br>AIBN: 2,2'- azobisisobutyronitrile | | | | | | | |

**Embodiments 9 to 15**

Embodiments 9 to 15 are embodiments in which the expansion rate, water content, and oxygen permeability of the silicone gel in each of Embodiments 1 to 7 above were evaluated, respectively, and the results are shown in Table 3 below.

[Table 3]

| | E (%) | $W_{H20}$ (%) | Dk ($\times$ $10^{-11}$ ($cm^2$/s) [$mLO_2$/(mL·mmHg)]) |
|---|---|---|---|
| Embodiment 9 | 1.40 | 10.00 | 70 |
| Embodiment 10 | 0.94 | 11.00 | 85 |
| Embodiment 11 | 0.95 | 11.40 | 91 |
| Embodiment 12 | 0.48 | 22.10 | 103 |
| Embodiment 13 | 0.02 | 23.10 | 110 |
| Embodiment 14 | 0.00 | 24.20 | 93 |
| Embodiment 15 | 0.00 | 32.20 | 90 |

**Embodiments 16 and 17**

Embodiment 16 and 17 are embodiments in which the expansion rate, water content, and oxygen permeability of the silicone gel produced in each of Embodiments 7 and 8 above were evaluated, respectively, and the results are shown in Table 4 below.

[Table 4]

| | E (%) | $W_{H20}$ (%) | Dk ($\times$ $10^{-11}$ ($cm^2$/s) [$mLO_2$/(mL·mmHg)]) |
|---|---|---|---|
| Embodiment 16 | 0.00 | 32.20 | 90 |
| Embodiment 17 | 14.01 | 6.90 | 55 |

**Embodiments 18 to 24**

Embodiments 18 to 24 are embodiments in which the Hansen solubility index HSP, dispersion force $\delta$D, dipole attraction $\delta$P, and hydrogen bonding force $\delta$H of each composition containing silicone used in the production of the silicone gel in each of Embodiments 1 to 7 above were evaluated, respectively, and the results are shown in Table 5 below.

[Table 5]

| | HSP of composition containing silicone ($MPa^{1/2}$) | $\delta$D ($MPa^{1/2}$) | $\delta$P ($MPa^{1/2}$) | $\delta$H ($MPa^{1/2}$) |
|---|---|---|---|---|
| Embodiment 18 | 16.39 | 13.90 | 4.98 | 7.11 |
| Embodiment 19 | 16.67 | 14.00 | 5.07 | 7.48 |

(continued)

| | HSP of composition containing silicone (MPa$^{1/2}$) | δD (MPa$^{1/2}$) | δP (MPa$^{1/2}$) | δH (MPa$^{1/2}$) |
|---|---|---|---|---|
| Embodiment 20 | 16.95 | 14.10 | 5.15 | 7.86 |
| Embodiment 21 | 17.23 | 14.20 | 5.24 | 8.24 |
| Embodiment 22 | 17.53 | 14.30 | 5.32 | 8.62 |
| Embodiment 23 | 17.82 | 14.40 | 5.41 | 9.00 |
| Embodiment 24 | 18.12 | 14.50 | 5.49 | 9.38 |

**Embodiments 25 to 28**

Production of Silicone Gels

Except that the components shown in Table 6 below were mixed by additionally injecting non-reactive diluents below into the composition of the silicone gel of Embodiment 8, silicone gels of each of Embodiments 25 to 28 were produced in the same manner as in Embodiment 1. In addition, the results obtained by evaluating the expansion rate and water content of the silicone gel produced in each of Embodiments 25 to 28 were compared with the results obtained by evaluating the expansion rate and water content of the silicone gel produced in Embodiment 8, and the results are shown in Table 6 below.

[Table 6]

| | | Embodiment 8 | Embodiment 25 | Embodiment 26 | Embodiment 27 | Embodiment 28 |
|---|---|---|---|---|---|---|
| Components | | Content (wt%) | | | | |
| Silicone macromer | 1 | 31.3 | 21.8 | 21.8 | 21.8 | 21.8 |
| Non-reactive diluent | IPA (molar volume : 60.1 $cm^3$/mol) | - | 30.0 | - | - | - |
| | BE (molar volume : 118.2 $cm^3$/mol) | - | - | 30.0 | - | - |
| | Octanol (molar volume : 130.2 $cm^3$/mol) | - | - | - | 30.0 | - |
| | Water | - | - | - | - | 30.0 |
| | (molar volume : 18.01 $cm^3$/mol) | | | | | |
| Silicone monomer | DS | 0.7 | 0.5 | 0.5 | 0.5 | 0.5 |
| | SIGMA | 38.1 | 26.4 | 26.4 | 26.4 | 26.4 |
| Hydrophilic monomer | HEMA | 26.0 | 18.1 | 18.1 | 18.1 | 18.1 |
| Hydrophilic additive | PVP | 0.5 | 0.4 | 0.4 | 0.4 | 0.4 |
| Crosslinking agent | TAIC | 0.7 | 0.5 | 0.5 | 0.5 | 0.5 |
| | TEGDMA | 1.2 | 0.8 | 0.8 | 0.8 | 0.8 |

(continued)

| | | Embodiment 8 | Embodiment 25 | Embodiment 26 | Embodiment 27 | Embodiment 28 |
|---|---|---|---|---|---|---|
| Components | | Content (wt%) | | | | |
| UV-blocking agent | 2-(4-Benzoyl-3-hydroxyph enoxy) eth yl acrylate | 0.9 | 0.9 | 0.9 | 0.9 | 0.9 |
| Photoinitiator | AIBN | 0.6 | 0.6 | 0.6 | 0.6 | 0.6 |
| Physical properties | | | | | | |
| E (%) | | 14.01 | 0.00 | 1.02 | 1.03 | 16.01 |
| $W_{H20}$ (%) | | 6.90 | 24.20 | 22.00 | 25.50 | 24.00 |

IPA: isopropyl alcohol
BE: butoxyethanol
DS: methacryloxypropyl-terminated polydimethylsiloxane
SIGMA: 2-propenoic acid, 2-methyl-2-hydroxy-3-3-1,3,3,3-tetramethyl-1-(trimethylsilyl)oxydisiloxanyl-propoxypropyl ester
HEMA: 2-hydroxyethyl methacrylate
PVP: polyvinyl pyrrolidone
TAIC: triallyl isocyanurate
TEGDMA: tetraethyleneglycol dimethacrylate
AIBN: 2,2'- azobisisobutyronitrile

**Embodiments 29 to 32**

Embodiments 29 to 32 are embodiments in which the Hansen solubility index HSP, dispersion force δD, dipole attraction δP, hydrogen bonding force δH, polymer-solvent interaction coefficient χ, and Gibbs free energy change ΔG of each composition containing silicone used in the production of the silicone gel in each of Embodiments 25 to 28 above were evaluated, respectively, and the results are shown in Table 7 below.

[Table 7]

| | HSP of composition containing silicone ($MPa^{1/2}$) | δD ($MPa^{1/2}$) | δP ($MPa^{1/2}$) | δH ($MPa^{1/2}$) | χ | ΔG |
|---|---|---|---|---|---|---|
| Embodiment 29 | 17.82 | 14.40 | 5.41 | 9.00 | 0.42 | $-6.57\times10^{23}$ |
| Embodiment 30 | 17.68 | 14.52 | 5.26 | 8.61 | 0.72 | $-2.40\times10^{23}$ |
| Embodiment 31 | 17.22 | 14.46 | 4.78 | 8.04 | 0.91 | $-1.76\times10^{23}$ |
| Embodiment 32 | 25.57 | 14.02 | 9.06 | 19.37 | 0.99 | $-7.02\times10^{24}$ |

**Embodiment 33**

Production of Silicone Gel

A silicone gel of Embodiment 33 was produced in the same manner as in Embodiment 1, except that the components shown in Table 8 below were mixed.

[Table 8]

| Components | | Content (wt%) |
|---|---|---|
| Silicone macromer | 2 | 44.1 |

(continued)

| Components | | Content (wt%) |
|---|---|---|
| Non-reactive diluent | IPA | 10.0 |
| Hydrophilic monomer | HEMA | 44.1 |
| Hydrophilic additive | NVP | 0.9 |
| Photoinitiator | AIBN | 0.9 |
| IPA: isopropyl alcohol<br>HEMA: 2-hydroxyethyl methacrylate<br>NVP: N-vinyl pyrrolidone<br>AIBN: 2,2'- azobisisobutyronitrile | | |

**Embodiments 34 to 37**

Production of Silicone Gels

Silicone gels of each of Embodiments 34 to 37 were produced in the same manner as in Embodiment 1, except that the components shown in Table 9 below were mixed.

[Table 9]

| | | Embodiment 34 | Embodiment 35 | Embodiment 36 | Embodiment 37 |
|---|---|---|---|---|---|
| Components | | Content (wt%) | | | |
| Silicone macromer | 2 | 39.2 | 34.3 | 29.4 | 49.0 |
| Non-reactive diluent | IPA | 20.0 | 30.0 | 40.0 | 0.0 |
| Hydrophilic monomer | HEMA | 39.2 | 34.3 | 29.4 | 49.0 |
| Hydrophilic additive | NVP | 0.8 | 0.7 | 0.6 | 1.0 |
| Photoinitiator | AIBN | 0.8 | 0.7 | 0.6 | 1.0 |
| IPA: isopropyl alcohol<br>HEMA: 2-hydroxyethyl methacrylate<br>NVP: N-vinyl pyrrolidone<br>AIBN: 2,2'- azobisisobutyronitrile | | | | | |

**Embodiments 38 to 41**

Embodiments 38 to 41 are embodiments in which the expansion rate, water content, and oxygen permeability of the silicone gel produced in each of Embodiments 33 to 36 above were evaluated, respectively, and the results are shown in Table 10 below.

[Table 10]

| | E (%) | $W_{H20}$ (%) | Dk ($\times$ $10^{-11}$ ($cm^2/s$) [$mLO_2$/(mL·mmHg)]) |
|---|---|---|---|
| Embodiment 38 | 4.98 | 15.21 | 110 |
| Embodiment 39 | 5.01 | 18.20 | 130 |
| Embodiment 40 | 4.99 | 20.43 | 142 |
| Embodiment 41 | 0.00 | 21.02 | 145 |

**Embodiments 42 and 43**

Embodiments 42 and 43 are embodiments in which the expansion rate, water content, and oxygen permeability of the silicone gel produced in each of Embodiments 35 and 37 above were evaluated, respectively, and the results are

shown in Table 11 below.

[Table 11]

| | E (%) | $W_{H20}$ (%) | Dk (× $10^{-11}$ ($cm^2$/s) [$mLO_2$/(mL·mmHg)]) |
|---|---|---|---|
| Embodiment 42 | 4.99 | 20.43 | 142 |
| Embodiment 43 | 0.00 | 1.02 | 50 |

**Embodiments 44 to 47**

Embodiments 44 to 47 are embodiments in which the Hansen solubility index HSP, dispersion force δD, dipole attraction δP, and hydrogen bonding force δH of each composition containing silicone used in the production of the silicone gel in each of Embodiments 33 to 36 above were evaluated, respectively, and the results are shown in Table 12 below.

[Table 12]

| | HSP of composition containing silicone ($MPa^{1/2}$) | δD ($MPa^{1/2}$) | δP ($MPa^{1/2}$) | δH ($MPa^{1/2}$) |
|---|---|---|---|---|
| Embodiment 44 | 18.03 | 13.59 | 6.14 | 10.13 |
| Embodiment 45 | 18.49 | 13.84 | 6.19 | 10.59 |
| Embodiment 46 | 18.96 | 14.08 | 6.24 | 11.06 |
| Embodiment 47 | 19.43 | 14.33 | 6.29 | 11.52 |

**Embodiments 48 to 50**

Production of Silicone Gels

Except that the components shown in Table 13 below were mixed by additionally injecting non-reactive diluents below into the composition of the silicone gel of Embodiment 37, silicone gels of each of Embodiments 48 to 50 were produced in the same manner as in Embodiment 1. In addition, the results obtained by evaluating the expansion rate and water content of the silicone gel produced in each of Embodiments 48 to 50 were compared with the results obtained by evaluating the expansion rate and water content of the silicone gel produced in Embodiment 37, and the results are shown in Table 13 below.

[Table 13]

| | | Embodiment 37 | Embodiment 48 | Embodiment 49 | Embodiment 50 |
|---|---|---|---|---|---|
| Components | | Content (wt%) | | | |
| Silicone macromer | 2 | 49.0 | 34.3 | 34.3 | 34.3 |
| Non-reactive diluent | IPA (molar volume : 60.1 $cm^3$/mol) | - | 30 | - | - |
| | BE (molar volume : 118.2 $cm^3$/mol) | - | - | 30 | - |
| | Octanol (molar volume : 130.2 $cm^3$/mol) | - | - | - | 30 |
| Hydrophilic monomer | HEMA | 49.0 | 34.3 | 34.3 | 34.3 |
| Hydrophilic additive | NVP | 1.0 | 0.7 | 0.7 | 0.7 |
| Photoinitiator | AIBN | 1.0 | 0.7 | 0.7 | 0.7 |

(continued)

| Physical properties | | | | |
|---|---|---|---|---|
| E (%) | 0.00 | 4.99 | 0.01 | 0.01 |
| $W_{H20}$ (%) | 1.02 | 20.43 | 16.71 | 15.07 |
| IPA: isopropyl alcohol<br>BE: butoxyethanol<br>HEMA: 2-hydroxyethyl methacrylate<br>NVP: N-vinyl pyrrolidone<br>AIBN: 2,2'- azobisisobutyronitrile | | | | |

**Embodiments 51 to 53**

Embodiments 51 to 53 are embodiments in which the Hansen solubility index HSP, dispersion force δD, dipole attraction δP, hydrogen bonding force δH, polymer-solvent interaction coefficient χ, and Gibbs free energy change ΔG of each composition containing silicone used in the production of the silicone gel in each of Embodiments 48 to 50 above were evaluated, respectively, and the results are shown in Table 14 below.

[Table 14]

| | HSP of composition containing silicone ($MPa^{1/2}$) | δD ($MPa^{1/2}$) | δP ($MPa^{1/2}$) | δH ($MPa^{1/2}$) | χ | △G |
|---|---|---|---|---|---|---|
| Embodiment 51 | 18.96 | 14.08 | 6.24 | 11.06 | 0.37 | $-4.97\times10^{23}$ |
| Embodiment 52 | 18.77 | 14.20 | 6.09 | 10.67 | 0.64 | $-2.09\times10^{23}$ |
| Embodiment 53 | 18.14 | 14.14 | 5.61 | 10.10 | 0.82 | $-1.60\times10^{23}$ |

**Embodiment 54**

Production of Silicone Gel

Except that the components shown in Table 15 below were mixed by additionally injecting a non-reactive diluent into the composition of the silicone gel of Embodiment 37, a silicone gel of Embodiment 54 was produced in the same manner as in Embodiment 1. In addition, the results obtained by evaluating the expansion rate and water content of the silicone gel produced in Embodiment 54 were compared with the results obtained by evaluating the expansion rate and water content of the silicone gel produced in Embodiment 37, and the results are shown in Table 15 below.

[Table 15]

| | | Embodiment 37 | Embodiment 54 |
|---|---|---|---|
| Components | | Content (wt%) | |
| Silicone macromer | 2 | 49.0 | 21.8 |
| Non-reactive diluent | BE | 0.0 | 55.0 |
| Hydrophilic monomer | HEMA | 49.0 | 21.8 |
| Hydrophilic additive | NVP | 1.0 | 0.7 |
| Photoinitiator | AIBN | 1.0 | 0.7 |
| Physical properties | | | |
| E (%) | | 0.00 | 13.04 |
| $W_{H20}$ (%) | | 1.02 | 19.00 |
| BE: butoxyethanol<br>HEMA: 2-hydroxyethyl methacrylate | | | |

(continued)

| | Embodiment 37 | Embodiment 54 |
|---|---|---|
| Components | Content (wt%) | |
| NVP: N-vinyl pyrrolidone<br>AIBN: 2,2'- azobisisobutyronitrile | | |

**Embodiment 55**

Embodiment 55 is an embodiment in which the Hansen solubility index HSP, dispersion force δD, dipole attraction δP, hydrogen bonding force δH, polymer-solvent interaction coefficient χ, and Gibbs free energy change ΔG of a composition containing silicone used in the production of the silicone gel in Embodiment 54 above were evaluated, respectively, and the results are shown in Table 16 below.

[Table 16]

| | HSP of composition containing silicone ($MPa^{1/2}$) | δD ($MPa^{1/2}$) | δP ($MPa^{1/2}$) | δH ($Mpa^{1/2}$) | χ | △G |
|---|---|---|---|---|---|---|
| Embodiment 55 | 20.84 | 16.30 | 7.50 | 10.60 | 0.90 | $-3.0\times10^{22}$ |

**Embodiments 56 and 57**

<u>Production of Silicone Gels</u>

Except that the components shown in Table 17 below were mixed by additionally injecting a non-reactive diluent into the composition of the silicone gel of Embodiment 8, silicone gels of Embodiments 56 and 57 were produced in the same manner as in Embodiment 1. In addition, the results obtained by evaluating the expansion rate and water content of the silicone gel produced in each of Embodiments 56 and 57 were compared with the results obtained by evaluating the expansion rate and water content of the silicone gel produced in Embodiment 8, and the results are shown in Table 17 below.

[Table 17]

| | | Embodiment 8 | Embodiment 56 | Embodiment 57 |
|---|---|---|---|---|
| Components | | Content (wt%) | | |
| Silicone macromer | 1 | 31.3 | 15.2 | 16.2 |
| Non-reactive diluent | IPA | 0.0 | 55.0 | 53.0 |
| Silicone monomer | DS | 0.7 | 0.4 | 0.4 |
| | SIGMA | 38.1 | 14.6 | 15.6 |
| Hydrophilic monomer | HEMA | 26.0 | 11.8 | 11.8 |
| Hydrophilic additive | PVP | 0.5 | 0.3 | 0.3 |
| Crosslinking agent | TAIC | 0.7 | 0.5 | 0.5 |
| | TEGDMA | 1.2 | 0.7 | 0.7 |
| UV-blocking agent | 2-(4-Benzoyl-3-hydroxyphenoxy) ethyl acrylate | 0.9 | 0.9 | 0.9 |
| Photoinitiator | AIBN | 0.6 | 0.6 | 0.6 |
| Physical properties | | | | |
| E (%) | | 14.01 | 20.03 | 18.05 |

(continued)

| | Embodiment 8 | Embodiment 56 | Embodiment 57 |
|---|---|---|---|
| Components | Content (wt%) | | |
| $W_{H20}$ (%) | 6.90 | 15.04 | 30.08 |
| IPA: isopropyl alcohol<br>DS: methacryloxypropyl-terminated polydimethylsiloxane<br>SIGMA: 2-propenoic acid, 2-methyl-2-hydroxy-3-3-1,3,3,3-tetramethyl-1-(trimethylsilyl)oxydisiloxanyl-propoxypropyl ester<br>HEMA: 2-hydroxyethyl methacrylate<br>PVP: polyvinyl pyrrolidone<br>TAIC: triallyl isocyanurate<br>TEGDMA: tetraethyleneglycol dimethacrylate<br>AIBN: 2,2'- azobisisobutyronitrile | | | |

**Embodiments 58 and 59**

Embodiments 58 and 59 are embodiments in which the Hansen solubility index HSP, dispersion force δD, dipole attraction δP, hydrogen bonding force δH, polymer-solvent interaction coefficient χ, and Gibbs free energy change ΔG of each composition containing silicone used in the production of the silicone gel in each of Embodiments 56 and 57 above were evaluated, respectively, and the results are shown in Table 18 below.

[Table 18]

| | HSP of composition containing silicone ($MPa^{1/2}$) | δD ($MPa^{1/2}$) | δP ($MPa^{1/2}$) | δH ($MPa^{1/2}$) | χ | △G |
|---|---|---|---|---|---|---|
| Embodiment 58 | 18.92 | 16.20 | 5.24 | 8.24 | 0.20 | $-8.1\times10^{23}$ |
| Embodiment 59 | 22.60 | 18.30 | 8.10 | 10.50 | 0.90 | $-10\times10^{23}$ |

**Embodiments 60 to 63**

<u>Production of Silicone Gels</u>

Silicone gels of each of Embodiments 60 to 63 were produced in the same manner as in Embodiment 33, except that the components shown in Table 19 below were mixed.

[Table 19]

| | | Embodiment 60 | Embodiment 61 | Embodiment 62 | Embodiment 63 |
|---|---|---|---|---|---|
| Components | | Content (wt%) | | | |
| Silicone macromer | 3 | 34.3 | | | |
| | 4 | | 34.3 | | |
| | 5 | | | 34.3 | |
| | 6 | | | | 34.3 |
| Non-reactive diluent | IPA | 30.0 | 30.0 | 30.0 | 30.0 |
| Hydrophilic monomer | HEMA | 34.3 | 34.3 | 34.3 | 34.3 |
| Hydrophilic additive | NVP | 0.7 | 0.7 | 0.7 | 0.7 |
| Photoinitiator | AIBN | 0.7 | 0.7 | 0.7 | 0.7 |

(continued)

| | Embodiment 60 | Embodiment 61 | Embodiment 62 | Embodiment 63 |
|---|---|---|---|---|
| Components | Content (wt%) | | | |
| IPA: isopropyl alcohol<br>HEMA: 2-hydroxyethyl methacrylate<br>NVP: N-vinyl pyrrolidone | | | | |
| AIBN: 2,2'- azobisisobutyronitrile | | | | |

**Embodiments 64 to 67**

Embodiments 64 to 67 are embodiments in which the Hansen solubility index HSP, dispersion force δD, dipole attraction δP, hydrogen bonding force δH, polymer-solvent interaction coefficient χ, and Gibbs free energy change ΔG of each composition containing silicone used in the production of the silicone gel in each of Embodiments 60 to 63 above were evaluated, respectively, and the results are shown in Table 20 below.

[Table 20]

| | HSP of composition containing silicone ($MPa^{1/2}$) | δD ($MPa^{1/2}$) | δP ($MPa^{1/2}$) | δH ($MPa^{1/2}$) | χ | △G |
|---|---|---|---|---|---|---|
| Embodiment 64 | 22.39 | 16.85 | 7.51 | 12.69 | 0.00 | $-2.20\times10^{23}$ |
| Embodiment 65 | 23.81 | 18.04 | 8.10 | 12.27 | 0.00 | $-1.74\times10^{23}$ |
| Embodiment 66 | 11.89 | 8.94 | 3.91 | 6.81 | 0.59 | $-3.57\times10^{23}$ |
| Embodiment 67 | 7.54 | 3.27 | 5.97 | 8.24 | 0.62 | $-4.00\times10^{23}$ |

**Embodiments 68 to 71**

Embodiments 68 to 71 are embodiments in which the expansion rate, water content, and oxygen permeability of the silicone gel produced in each of Embodiments 60 to 63 above were evaluated, respectively, and the results are shown in Table 21 below.

[Table 21]

| | E (%) | $W_{H20}$ (%) | Dk ($\times$ $10^{-11}$ ($cm^2/s$) [$mLO_2/(mL\cdot mmHg)$]) |
|---|---|---|---|
| Embodiment 68 | 0.00 | 1.02 | 30 |
| Embodiment 69 | 0.00 | 0.01 | 23 |
| Embodiment 70 | 12.06 | 16.04 | 71 |
| Embodiment 71 | 15.01 | 20.03 | 75 |

## Claims

**1.** A composition containing silicone comprising:

a silicone macromer and a non-reactive diluent,
wherein the silicone macromer has a Hansen solubility index HSP of 10.0 $MPa^{1/2}$ to 20.0 $MPa^{1/2}$.

**2.** The composition containing silicone of claim 1, wherein the composition containing silicone has a dispersion force δD of 13.3 $MPa^{1/2}$ to 15.0 $MPa^{1/2}$, a dipole attraction δP of 4.5 $MPa^{1/2}$ to 6.6 $MPa^{1/2}$, and a hydrogen bonding force δH of 6.8 $MPa^{1/2}$ to 12.0 $MPa^{1/2}$.

**3.** The composition containing silicone of claim 1, wherein the composition containing silicone has a polymer-solvent interaction coefficient $\chi$ of 0.30 to 0.99.

**4.** The composition containing silicone of claim 1, wherein the composition containing silicone has a Gibbs free energy change $\Delta G$ of $-9 \times 10^{23}$ to $-3.5 \times 10^{22}$.

**5.** The composition containing silicone of claim 1, wherein the silicone macromer is represented by Chemical Formula 1 below:

[Chemical Formula 1]

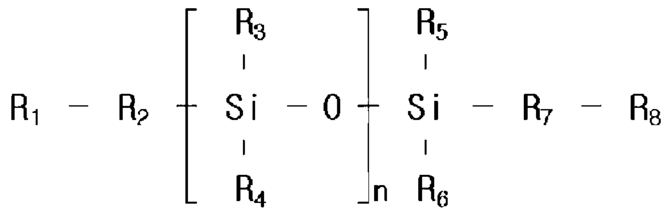

wherein in Chemical Formula 1 above, n is 5 to 20,
$R_1$ is a (meth)acryloyl group,
$R_2$ is an alkylene group having 1 to 40 carbon atoms, wherein a methylene group included in the alkylene group can be substituted with -O-, -N($R_9$)-, or a carbonyl group, $R_9$ is a hydrogen atom or an alkyl group having 1 to 6 carbon atoms,
$R_3$ to $R_6$ are each independently hydrogen, a hydroxyl group, an amino group, a carboxyl group, a halogen atom, or an alkyl group having 1 to 3 carbon atoms, wherein the alkyl group can be substituted with a hydroxyl group, an isocyanate group, a halogen atom, a carboxyl group, or an alkoxy group having 1 to 8 carbon atoms,
$R_7$ is a single bond or an alkylene group having 1 to 30 carbon atoms, wherein a methylene group included in the alkylene group can be substituted with -O-, -N($R_{10}$)-, or a carbonyl group, $R_{10}$ is a hydrogen atom or an alkyl group having 1 to 6 carbon atoms, and
$R_8$ is hydrogen, a hydroxyl group, an isocyanate group, an amino group, a carboxyl group, a halogen atom, an alkyl group having 1 to 8 carbon atoms, an alkoxy group having 1 to 8 carbon atoms, or a (meth)acryloyl group.

**6.** The composition containing silicone of claim 1, wherein the non-reactive diluent is one or more selected from a group consisting of organic acid solvents, alcohol-based solvents, hydrocarbon-based solvents, and ketone-based solvents.

**7.** The composition containing silicone of claim 1, wherein the non-reactive diluent is an aliphatic alcohol having 1 to 13 carbon atoms.

**8.** The composition containing silicone of claim 1, wherein the non-reactive diluent has a molar volume of 20 $cm^3$/mol to 800 $cm^3$/mol.

**9.** The composition containing silicone of claim 1, wherein the non-reactive diluent is included at greater than 0 wt% and less than 50 wt%.

**10.** The composition containing silicone of claim 1, further comprising one or more selected from a group consisting of a silicone monomer, a hydrophilic monomer, a hydrophilic additive, an amphiphilic polymer, a crosslinking agent, a UV-blocking agent, and an initiator.

**11.** A silicone hydrogel obtained by polymerizing and subjecting to a hydration reaction the composition containing silicone of any one of claims 1 to 10.

**12.** The silicone hydrogel of claim 11, wherein the silicone hydrogel has an expansion rate E of General Formula 1 below of 9% or less,

[General Formula 1]

$$E = \frac{b - a}{a} \times 100$$

wherein in General Formula 1 above, a is an area of the silicone gel before the hydration reaction, and b is the area of the silicone hydrogel that has been subjected to the hydration reaction.

**13.** The silicone hydrogel of claim 11, wherein the silicone hydrogel has a water content of 10% or more.

**14.** The silicone hydrogel of claim 11, wherein the silicone hydrogel has an oxygen permeability of $60 \times 10^{-11}(cm^2/s)[mLO_2/(mL \cdot mmHg)]$ to $160 \times 10^{-11}(cm^2/s)[mLO_2/(mL \cdot mmHg)]$.

**15.** A method for producing a silicone hydrogel, comprising:

a polymerization step of polymerizing the composition containing silicone of any one of claims 1 to 10; and
a hydration step of subjecting the polymerized silicone gel to a hydration reaction.

**16.** The method of claim 15, wherein in the hydration step, the non-reactive diluent included in the silicone gel is substituted with water via a hydration reaction.

**17.** A contact lens comprising the silicone hydrogel of claim 11.

**INTERNATIONAL SEARCH REPORT**

International application No.
**PCT/KR2024/004609**

**A. CLASSIFICATION OF SUBJECT MATTER**

**C08F 290/06**(2006.01)i; **C08F 230/08**(2006.01)i; **C08F 220/20**(2006.01)i; **C08F 2/44**(2006.01)i; **C08F 6/00**(2006.01)i; **C08J 3/075**(2006.01)i; **G02B 1/04**(2006.01)i

According to International Patent Classification (IPC) or to both national classification and IPC

**B. FIELDS SEARCHED**

Minimum documentation searched (classification system followed by classification symbols)

C08F 290/06(2006.01); B29D 11/00(2006.01); C07F 7/10(2006.01); C08F 130/08(2006.01); C08F 220/34(2006.01); G02B 1/04(2006.01); G02C 7/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 콘택트 렌즈(contact lens), 실리콘 마크로머(silicone macromer), 비반응성 희석제(non-reactive diluent), 한센 용해도 지수(Hansen solubility index), 분산력(dispersion force), 쌍극자 인력(dipole attraction), 수소 결합력(hydrogen bonding force), 고분자 용매 상호작용 계수(polymer-solvent interaction coefficient), 깁스 프리에너지 변화량(change in Gibbs free energy)

**C. DOCUMENTS CONSIDERED TO BE RELEVANT**

| Category* | Citation of document, with indication, where appropriate, of the relevant passages | Relevant to claim No. |
|---|---|---|
| X | US 2014-0155515 A1 (PEGAVISION CORPORATION) 05 June 2014 (2014-06-05)<br>See claims 1-16; paragraphs [0009]-[0061]; and table 2. | 1-17 |
| A | US 2015-0133619 A1 (SHIN-ETSU CHEMICAL CO., LTD.) 14 May 2015 (2015-05-14)<br>See entire document. | 1-17 |
| A | KR 10-2018-0118794 A (COOPERVISION INTERNATIONAL HOLDING COMPANY, LP) 31 October 2018 (2018-10-31)<br>See entire document. | 1-17 |
| A | KR 10-2014-0009402 A (COOPERVISION INTERNATIONAL HOLDING COMPANY, LP) 22 January 2014 (2014-01-22)<br>See entire document. | 1-17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 July 2024** | **18 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2024/004609**

**C. DOCUMENTS CONSIDERED TO BE RELEVANT**

| Category* | Citation of document, with indication, where appropriate, of the relevant passages | Relevant to claim No. |
| --- | --- | --- |
| A | JP 2015-096471 A (SHIN-ETSU CHEMICAL CO., LTD.) 21 May 2015 (2015-05-21) See entire document. | 1-17 |

Form PCT/ISA/210 (second sheet) (July 2022)

**INTERNATIONAL SEARCH REPORT**
**Information on patent family members**

International application No.
**PCT/KR2024/004609**

| Patent document cited in search report | Publication date (day/month/year) | Patent family member(s) | Publication date (day/month/year) |
|---|---|---|---|
| US 2014-0155515 A1 | 05 June 2014 | CN 103848946 A | 11 June 2014 |
| | | CN 106800626 A | 06 June 2017 |
| | | EP 2738221 A1 | 04 June 2014 |
| | | JP 2014-109028 A | 12 June 2014 |
| | | JP 6165450 B2 | 19 July 2017 |
| | | US 9046641 B2 | 02 June 2015 |
| US 2015-0133619 A1 | 14 May 2015 | EP 2873673 A2 | 20 May 2015 |
| | | EP 2873673 A3 | 05 August 2015 |
| | | EP 2873673 B1 | 28 June 2017 |
| | | EP 2952515 A1 | 09 December 2015 |
| | | EP 2952515 B1 | 12 July 2017 |
| | | JP 2015-093976 A | 18 May 2015 |
| | | JP 2015-140393 A | 03 August 2015 |
| | | JP 6045515 B2 | 14 December 2016 |
| | | JP 6073207 B2 | 01 February 2017 |
| | | US 9266985 B2 | 23 February 2016 |
| KR 10-2018-0118794 A | 31 October 2018 | CN 108885279 A | 23 November 2018 |
| | | CN 108885279 B | 04 August 2020 |
| | | CN 108885280 A | 23 November 2018 |
| | | EP 3446158 A1 | 27 February 2019 |
| | | EP 3446158 B1 | 24 June 2020 |
| | | EP 3446159 A1 | 27 February 2019 |
| | | EP 3446159 B1 | 14 June 2023 |
| | | JP 2019-515326 A | 06 June 2019 |
| | | JP 2019-515327 A | 06 June 2019 |
| | | JP 6768827 B2 | 14 October 2020 |
| | | JP 6768828 B2 | 14 October 2020 |
| | | KR 10-1943288 B1 | 28 January 2019 |
| | | KR 10-2018-0133424 A | 14 December 2018 |
| | | US 10139521 B2 | 27 November 2018 |
| | | US 10139522 B2 | 27 November 2018 |
| | | US 2017-0307778 A1 | 26 October 2017 |
| | | US 2017-0307779 A1 | 26 October 2017 |
| | | WO 2017-182813 A1 | 26 October 2017 |
| | | WO 2017-182817 A1 | 26 October 2017 |
| KR 10-2014-0009402 A | 22 January 2014 | CN 103764724 A | 30 April 2014 |
| | | CN 103764724 B | 06 April 2016 |
| | | EP 2681120 A2 | 08 January 2014 |
| | | EP 2681120 A4 | 03 May 2017 |
| | | EP 2681120 B1 | 31 October 2018 |
| | | EP 2681121 A2 | 08 January 2014 |
| | | EP 2681121 B1 | 08 August 2018 |
| | | EP 3456758 A1 | 20 March 2019 |
| | | US 2012-0216488 A1 | 30 August 2012 |
| | | US 2014-0018465 A1 | 16 January 2014 |
| | | US 2014-0024738 A1 | 23 January 2014 |
| | | US 8513325 B2 | 20 August 2013 |
| | | US 9121998 B2 | 01 September 2015 |
| | | US 9360594 B2 | 07 June 2016 |
| | | WO 2012-118670 A2 | 07 September 2012 |

Form PCT/ISA/210 (patent family annex) (July 2022)

**INTERNATIONAL SEARCH REPORT**
**Information on patent family members**

International application No.
**PCT/KR2024/004609**

| Patent document cited in search report | Publication date (day/month/year) | Patent family member(s) | Publication date (day/month/year) |
| --- | --- | --- | --- |
| | | WO 2012-118670 A3 | 06 February 2014 |
| | | WO 2012-118676 A2 | 07 September 2012 |
| | | WO 2012-118676 A3 | 24 April 2014 |
| | | WO 2012-118685 A2 | 07 September 2012 |
| | | WO 2012-118685 A3 | 24 April 2014 |
| | | WO 2012-118685 A8 | 31 January 2013 |
| | | WO 2012-118686 A2 | 07 September 2012 |
| | | WO 2012-118686 A3 | 13 March 2014 |
| JP 2015-096471 A | 21 May 2015 | JP 6037454 B2 | 07 December 2016 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **CHARLES M. HANSEN**. Hansen Solubility Parameters: A User's Handbook. CRC Press, 2007